Europäisches Patentamt

(19) European Patent Office

Office européen des brevets

(11) Numéro de publication: **0 184 523**
**A1**

(12) # DEMANDE DE BREVET EUROPEEN

(21) Numéro de dépôt: 85420197.7

(22) Date de dépôt: 05.11.85

(51) Int. Cl.⁴: **A 47 B 57/14**
**A 47 B 57/38, F 16 B 12/30**

(30) Priorité: 16.11.84 FR 8417997

(43) Date de publication de la demande:
11.06.86 Bulletin 86/24

(84) Etats contractants désignés:
AT BE CH DE GB IT LI LU NL SE

(71) Demandeur: O.D.I.C.
Z.I. du Coudray 34 avenue A. Einstein
F-93130 Le Blanc Mesnil Seine St. Denis(FR)

(72) Inventeur: Lauzier, René

Ruy Isère(FR)

(72) Inventeur: Tirel, Claude
13 place Sézane
Villiers Le Bel Val d'Oise(FR)

(74) Mandataire: Bratel, Gérard et al,
Cabinet GERMAIN & MAUREAU Le Britannia - Tour C 20,
boulevard E. Deruelle
F-69003 Lyon(FR)

(54) Rayonnage à clayettes amovibles.

(57) Ce rayonnage est composé d'échelles verticales (1) et de clayettes rectangulaires amovibles (2), disposées horizontalement à divers niveaux, ces composants étant réalisés à partir de profilés et de tubes métalliques. Les échelles (1) ont leurs montants (3) reliés entre eux par des paires de barreaux (5) situés à même hauteur. Les clayettes (2) présentent à leurs extrémités des traverses (14) avec section en forme de crochet, venant coiffer les barreaux (5), ainsi qu'à leurs angles des facettes d'appui verticales (16) pressées contre les faces latérales (10) des montants (3) des échelles (1).
Application à l'industrie alimentaire.

EP 0 184 523 A1

./...

Croydon Printing Company Ltd.

FIG.1

1

"Rayonnage à clayettes amovibles"

La présente invention concerne un rayonnage à clayettes amovibles, composé essentiellement d'échelles verticales espacées les unes des autres, avec montants parallèles et barreaux transversaux, et de clayettes rectangulaires amovibles disposées horizontalement à divers niveaux de manière à relier entre elles deux échelles consécutives.

Des rayonnages à clayettes amovibles de ce type sont utilisés dans l'industrie alimentaire, notamment pour les chambres froides et les entrepôts frigorifiques. Ils constituent un système modulaire permettant d'obtenir toutes longueurs de rayonnages, avec des implantations droites ou en "L" ou autres, et avec possibilités de choisir divers types de clayettes en les plaçant à la hauteur désirée.

Certains systèmes de rayonnages de ce genre ont leurs composants - échelles et clayettes - réalisés en fil métallique, plus particulièrement en fil d'acier. Les réalisations correspondantes sont lourdes et, surtout, difficiles à nettoyer, ce qui constitue un grave inconvénient, du point de vue de l'hygiène dans les applications alimentaires.

D'autres systèmes existants du même genre utilisant des éléments fabriqués à partir de profilés et de tubes métalliques, ce qui permet des réalisations plus légères, en acier inoxydable ou en aluminium ou en alliage léger. Ces réalisations restent toutefois compliquées, une réalisation particulière de rayonnage de la catégorie ici considérée comprenant par exemple : des échelles avec montants portant des taquets d'accrochage- des barres longitudinales qui relient deux échelles consécutives en s'accrochant sur les taquets - des traverses reliant entre elles les barres longitudinales - enfin les clayettes amovibles, posées sur les traverses. L'ensemble est coûteux en raison de ses nombreux composants distincts, et sa complexité rend le montage et le démontage des clayettes long et malaisé. Par ailleurs, les échelles ne sont pas universelles, l'implantation des taquets d'accrochage sur leurs montants devant être différente selon qu'il s'agit d'une échelle située à une extrémité du rayonnage, donc comportant des clayettes sur un seul côté, ou d'une échelle située en un point intermédiaire de la longueur du rayonnage, donc comportant des clayettes sur ses deux côtés. Enfin, les réalisations actuelles comportant des vis, écrous, rivets, rondelles ou obturateurs apparents extérieurement, retenant la saleté et difficiles à nettoyer.

La présente invention vise à éliminer tous ces inconvénients, en fournissant un rayonnage à clayettes amovibles, avec composants réalisés à partir de profilés et de tubes métalliques, qui soit à la fois : de structure très simple, facile à monter et à démonter tout en étant d'une grande rigidité, et d'un nettoyage facile.

A cet effet, dans le rayonnage à clayettes amovibles objet de l'invention, les échelles ont leurs montants reliés entre eux, à différents niveaux, par des paires de barreaux situés à même hauteur et comportant chacun une face d'accrochage légèrement inclinée sur la verticale et tournée vers l'autre barreau de la même paire, tandis que les clayettes présentent, à leurs extrémités, d'une part des moyens d'accrochage aptes à coiffer un barreau en se serrant contre sa face d'accrochage inclinée, d'autre part des facettes d'appui verticales situées aux angles des clayettes et prévues pour être pressées contre les faces latérales des montants des échelles.

L'assemblage des clayettes entre les montants s'effectue ainsi avec un effet d'auto-coincement, qui garantit la rigidité de cet assemblage et qui est d'autant plus fort que la charge supportée par la clayette est plus élevée. L'ensemble est très simple, au point de vue de la structure et de l'utilisation, puisqu'il comprend seulement deux composants de base : échelles et clayettes, les échelles étant universelles grâce à leurs barreaux associés par paires, et les clayettes venant s'accrocher directement sur ces barreaux.

Les moyens d'accrochage, prévus aux extrémités de chaque clayette, peuvent être constitués par une traverse présentant sur pratiquement toute sa longueur une section constante en forme de crochet, prévue pour coopérer avec un barreau d'une échelle, les deux extrémités de ladite traverse comportant des facettes d'appui verticales situées en retrait du profil en crochet et prévues pour coopérer avec les faces latérales des montants d'une échelle. Dans une variante, le profil continu en crochet de la traverse peut être remplacé par deux ou plusieurs pattes d'accrochage individualisées, de même profil.

Avantageusement, les barreaux associés par paires sont tubulaires et sont fixés contre les faces intérieures des montants des échelles au moyen de vis dont les têtes sont logées à l'intérieur des montants. Ainsi, l'ensemble du rayonnage ne présente aucune partie extérieure en saillie agressive telle que vis, écrou, etc..., et il est parfaitement lisse, ce qui procure une grande facilité de nettoyage et contribue également à l'esthétique de l'ensemble.

Selon une autre caractéristique avantageuse de l'invention, des patins d'appui en matière synthétique sont prévus sur les facettes situées aux angles des clayettes et prévues pour être pressées contre les faces latérales des montants d'une échelle, de manière à éviter sur ces montants des rayures dues au frottement métal sur métal, et aussi à éviter les bruits gênants lors de la mise en place des clayettes.

Des cadres rectangulaires amovibles, prévus pour recevoir des accessoires amovibles, tels que bacs ou plateaux, peuvent être pourvus à leurs extrémités de moyens d'accrochage et de facettes d'appui similaires à ceux des clayettes, pour être montés par le même moyen entre deux échelles consécutives.

De toute façon, l'invention sera mieux comprise à l'aide de la description qui suit, en référence au dessin schématique annexé représentant, à titre d'exemple non limitatif, une forme de réalisation de ce rayonnage à clayettes amovibles :

Figure 1 est une vue d'ensemble, en perspective, d'un rayonnage conforme à l'invention avec clayettes et autres éléments montés de manière analogue ;

Figure 2 est une vue de détail partielle en perspective d'une clayette de ce rayonnage ;

Figure 3 est une vue en coupe verticale montrant partiellement une échelle du même rayonnage, ainsi que les extrémités de deux clayettes accrochées sur l'échelle ;

Figure 4 est une vue en coupe horizontale, selon 4-4 de figure 3, montrant un détail de l'échelle ;

Figure 5 représente, en perspective, une pièce de liaison permettant la réalisation d'un rayonnage en "L" ou en "T".

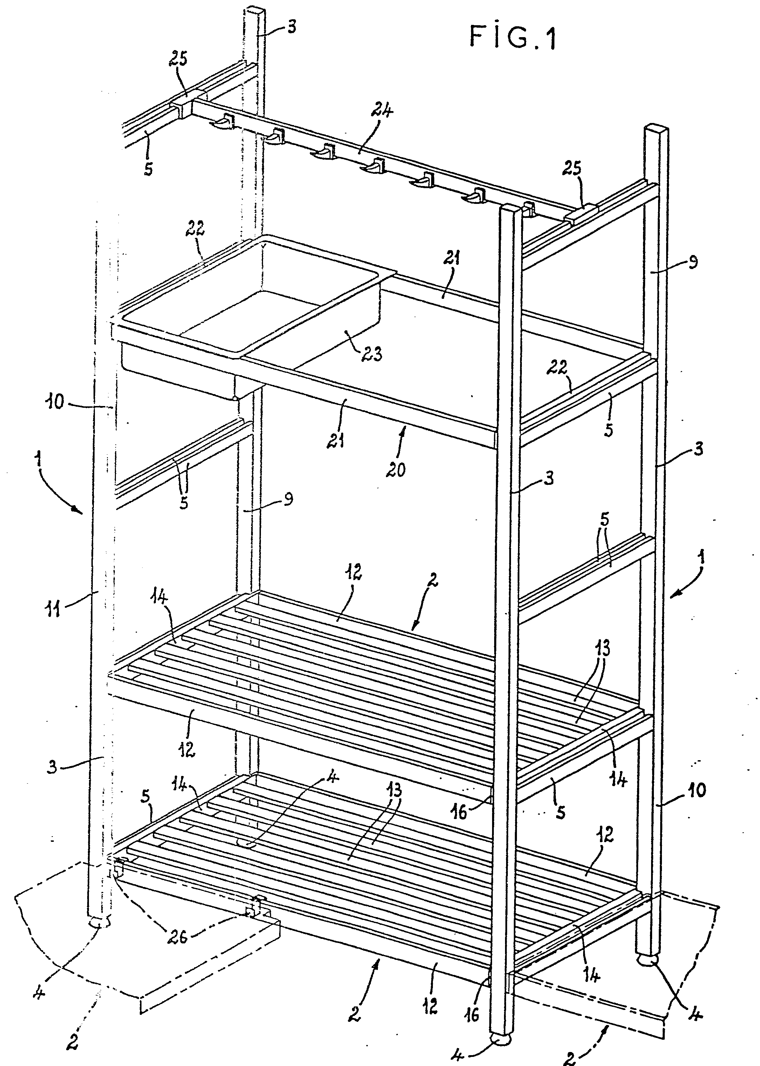

La figure 1 montre un rayonnage à clayettes amovibles, avec ses possibilités d'extension. Ce rayonnage est composé essentiellement d'échelles verticales (1), disposées transversalement, et de clayettes horizontales (2) disposées longitudinalement de manière à relier entre elles deux échelles (1) consécutives.

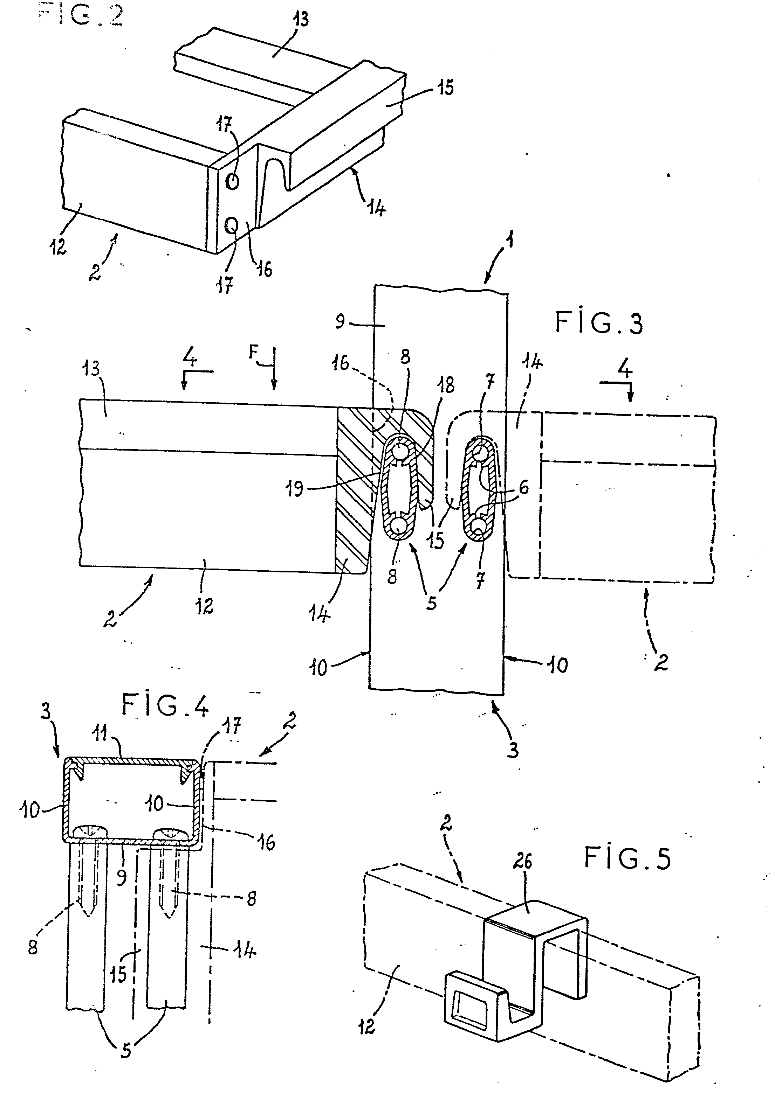

Chaque échelle (1) comprend deux montants parallèles (3) munis e pieds (4), et des barreaux transversaux (5) qui relient les deux montants (3) à différents niveaux. Les barreaux (5) sont associés par paires, deux l rreaux associés étant situés à même hauteur, en vis-à-vis. Comme le montre plus particulièrement la figure 3, chaque barreau (5) est constitué par un tube métallique de section allongée dans le sens vertical, possédant quatre faces légèrement inclinées sur la verticale. Les deux faces supérieures et les deux faces inférieures, d'inclinaisons opposées, sont reliées par des parties arrondies prolongées vers l'intérieur du barreau (5) par des nervures (6) qui délimitent des rainures (7) de section circulaire.

Comme montré à la figure 4, les rainures (7) reçoivent à leurs extrémités des vis (8) par lesquelles les barreaux (5) sont fixés contre les faces intérieures (9) des montants (3) des échelles, les têtes des vis de fixation (8) étant logées à l'intérieur des montants (3). Pour que ces vis (8) puissent être mises en place, les montants (3) des échelles (1) sont constitués, chacun, par un profilé en "U" formant la face intérieure (9) et les deux faces latérales (10) du montant (3), et par une baguette plate de fermeture (11), formant la face extérieure du montant (3) et fixée par clipsage sur les ailes du profilé en "U".

Chaque clayette amovible (2) se présente comme une grille, formée de profilés longitudinaux (12,13), les uns (12) situés en bordure et les autres (13) situés en position intérieure, qui relient deux traverses extrêmes (14). Comme le montre plus particulièrement la figure 3, chaque traverse extrême (14) d'une clayette (2) présente, sur pratiquement la totalité de sa longueur, un profil recourbé en crochet (15). Les deux extrémités de la traverse (14) comportent des facettes d'appui verticales (16) situées en retrait du profil en crochet (15), ces facettes (16) pouvant être pourvues de patins d'appui (17) en matière synthétique.

La mise en place d'une clayette (2) entre deux échelles (1) consécutives s'effectue, comme illustré surtout par la figure 3, en accrochant chaque extrémité de la clayette (2) sur un barreau (5) par son profil (15) venant coiffer ledit barreau. En exerçant une poussée de haut en bas sur la clayette (2), suivant la flèche (F), on provoque simultanément:

- un serrage du profil (15) contre une face (18) du barreau (5) dite "face d'accrochage", tournée vers le barreau associé ;

- un pressage des facettes d'appui (16), directement ou par l'intermédiaire des patins (17), contre les faces latérales (10) des montants (3) - voir aussi figure 4.

On obtient ainsi un effet d'auto-coincement, garantissant la rigidité et la précision de l'assemblage à angle droit entre la clayette (2) et les échelles (1). Cet effet d'auto-coincement est encore renforcé si la clayette (2) reçoit une charge importante. On notera qu'en raison de l'appui des facettes (16) sur les faces latérales (10) des montants (3), le serrage du profil (15) sur le barreau (5) se fait d'un seul côté de ce barreau sur la face dite "face d'accrochage" (18), un interstice (19) subsistant entre le profil (15) et la face opposée du barreau (5).

Le groupement des barreaux (5) par paires, et l'implantation de ces barreaux sur les montants (3), permettent d'accrocher de part et d'autre des échelles (1) deux clayettes (2) situées au même niveau - voir les tracés en traits mixtes sur la partie droite de la figure 1, ainsi que sur la figure 3 à gauche. On peut ainsi réaliser à partir de deux composants de base seulement - échelles (1) et clayettes (2) - des rayonnages de toute longueur désirée. Le caractère amovible des clayettes (2) permet, bien entendu, de disposer ces clayettes (2) à toute hauteur désirée et aussi de changer très facilement leur hauteur si nécessaire, le montage et le démontage étant extrêmement aisés.

Les clayettes (2) peuvent être aussi complétées, ou remplacées, par des cadres rectangulaires amovibles (20), formés de deux longerons (21) reliant deux traverses extrêmes (22) pourvues de profils d'accrochage et de facettes d'appui similaires à ceux des clayettes, pour être montés de la même manière entre deux échelles (1) - voir figure 1. Ces cadres (20) peuvent recevoir des bacs (23), des plateaux ou tous autres accessoires amovibles de dimensions adaptées, utilisés dans l'industrie alimentaire.

Les barreaux (5) des échelles permettent encore le montage, entre deux échelles (1) consécutives, de barres à dents ou à crochets (24) munies d'embouts (25) s'accrochant sur les barreaux (5) - voir figure 1, en haut.

Des pièces de liaison (26) permettent, par ailleurs, le raccordement de deux tronçons de rayonnage de manière à obtenir un rayonnage en "L" ou en "T". Comme le montre la figure 5, chaque pièce de liaison (26) est conçue pour le raccordement à angle droit de deux clayettes (2), et elle présente, à cet effet, une forme en "S" lui permettant de coiffer un profilé longitudinal (12) appartenant à une première clayette (2), et de soutenir une traverse extrême (14) appartenant à une deuxième clayette (2).

Comme il va de soi, l'invention ne se limite pas à la seule forme de réalisation de ce rayonnage à clayettes amovibles qui a été décrite ci-dessus, à titre d'exemple ; elle en embrasse, au contraire, toutes les variantes respectant le même principe ; c'est ainsi, notamment, que l'on ne s'éloignerait pas de l'esprit de l'invention en remplaçant le profil continu (15) par tous moyens d'accrochage équivalents, tels que deux ou plusieurs pattes d'accrochage individualisées, de même profil.

## REVENDICATIONS

1. Rayonnage à clayettes amovibles, composé d'échelles verticales (1) espacées les unes des autres, avec montants parallèles (3) et barreaux transversaux (5), et de clayettes rectangulaires amovibles (2) disposées horizontalement à divers niveaux de manière à relier entre elles deux échelles (1) consécutives, les composants de ce rayonnage étant réalisés à partir de profilés et de tubes métalliques, caractérisé en ce que les échelles (1) ont leurs montants (3) reliés entre eux, à différents niveaux, par ces paires de barreaux (5) situés à même hauteur et comportant chacun une face d'accrochage (18) légèrement inclinée sur la verticale et tournée vers l'autre barreau (5) de la même paire, tandis que les clayettes (2) présentent, à leurs extrémités, d'une part, des moyens d'accrochage (15) aptes à coiffer un barreau (5) en se serrant contre sa face d'accrochage inclinée (18), d'autre part des facettes d'appui verticales (16) situées aux angles des clayettes (2) et prévues pour être pressées contre les faces latérales (10) des montants (3) des échelles (1).

2. Rayonnage à clayettes amovibles selon la revendication 1, caractérisé en ce que les moyens d'accrochage, prévus aux extrémités de chaque clayette (2), sont constitués par une traverse (14) présentant sur pratiquement toute sa longueur une section constante en forme de crochet (15), prévue pour coopérer avec un barreau (5) d'une échelle (1), les deux extrémités de ladite traverse (14) comportant des facettes d'appui verticales (16) situées en retrait du profil en crochet (15) et prévues pour coopérer avec les faces latérales (10) des montants (3) d'une échelle (1).

3. Rayonnage à clayettes amovibles selon la revendication 1, caractérisé en ce que les moyens d'accrochage, prévus aux extrémités de chaque clayette (2), sont constitués par des pattes d'accrochage individualisées, qui présentent un profil prévu pour coopérer avec un barreau (5) d'une échelle (1).

4. Rayonnage à clayettes amovibles selon l'une quelconque des revendications 1 à 3, caractérisé en ce que des patins d'appui (17) en matière synthétique sont prévus sur les facettes (16) situées aux angles des clayettes (2) et prévues pour être pressées contre les faces latérales (10) des montants (3) d'une échelle (1).

5. Rayonnage à clayettes amovibles selon l'une quelconque des revendications 1 à 4, caractérisé en ce qu'il comprend en outre des cadres rectangulaires amovibles (20), prévus pour recevoir des accessoires amovibles tels que bacs (23) ou plateaux, et pourvus à leurs extrémités de moyens d'accrochage et de facettes d'appui similaires à ceux des clayettes (2).

6. Rayonnage à clayettes amovibles selon l'une quelconque des revendications 1 à 5, caractérisé en ce que les barreaux (5) associés par paires sont tubulaires et sont fixés contre les faces intérieures (9) des montants (3) des échelles (1) au moyen de vis (8) dont les têtes sont logées à l'intérieur des montants (3).

7. Rayonnage à clayettes amovibles selon la revendication 6, caractérisé en ce que chaque barreau (5) d'une échelle (1) possède quatre faces légèrement inclinées sur la verticale, les deux faces supérieures et les deux faces inférieures d'inclinaisons opposées étant reliées par des parties arrondies prolongées vers l'intérieur du barreau (5) par des nervures (6) délimitant des rainures (7) de section circulaire recevant à leurs extrémités, les vis (8) de fixation aux montants (3).

8. Rayonnage à clayettes amovibles selon la revendication 6 ou 7, caractérisé en ce que les montants (3) des échelles (1) sont constitués, chacun, par un profilé en "U" formant la face intérieure (9) et les deux faces latérales (10) du montant, et par une baguette plate de fermeture (11), formant la face extérieure du montant (3) et fixée par clipsage sur les ailes du profilé en "U".

0184523

# FİG.1

FIG.2

FIG.3

FIG.4

FIG.5

Office européen
des brevets

**RAPPORT DE RECHERCHE EUROPEENNE**

EP 85 42 0197

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | BE-A- 698 214 (BALLY) <br> * En entier * | 1,2 | A 47 B 57/14 <br> A 47 B 57/38 <br> F 16 B 12/30 |
| Y | FR-A-1 469 133 (LEBRE) <br> * Page 1, colonne de droite; page 2, colonne de gauche; figures 1,3 * | 1,2 | |
| A | FR-A-2 478 979 (GUBRI) <br> * Page 5, lignes 4-20; figures 1,2 * | 3 | |
| A | FR-A-2 465 113 (VATTIER) <br> * Page 1, lignes 6-30; figures 3,9 * | 6,7 | |

DOMAINES TECHNIQUES
RECHERCHES (Int. Cl.4)

A 47 B
F 16 B

Le present rapport de recherche a été établi pour toutes les revendications

| Lieu de la recherche <br> LA HAYE | Date d'achèvement de la recherche <br> 19-02-1986 | Examinateur <br> OFFMANN P.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82